# EUROPEAN PATENT APPLICATION

(11) **EP 3 492 857 A1**
(43) Date of publication of application: **05.06.2019**
(21) Application number: 18209908.5
(22) Date of filing: 03.12.2018
(51) Int. Cl.: F28F 9/02, F28D 1/053, F28F 1/02, F28F 1/26

(54) **HIGH TEMPERATURE PLATE FIN HEAT EXCHANGER**

(30) Priority: 01.12.2017 US 201762593379 P
(71) Applicant: United Technologies Corporation, Farmington, CT 06032 (US)
(72) Inventor: McCAFFREY, Michael G., Windsor, CT Connecticut 06095 (US)
(74) Representative: Dehns

(57) **Abstract**

A heat exchanger (10) includes at least one plate (12) including a first end portion. A second end portion is spaced apart from the first end portion. A cavity is disposed between the first end portion and the second end portion. The cavity defines a first flow path. An outer surface portion defines a second flow path. The at least one plate (12) includes a single unitary part without a joint between any two portions. A first end cap (14) defines an inlet (22) disposed at the first end portion. A second end cap (16) defines an outlet (24) at the second end portion.

## Description

### BACKGROUND

A plate fin heat exchanger includes adjacent flow paths that transfer heat from a hot flow to a cooling flow. The flow paths are defined by a combination of plates and fins that are arranged to transfer heat from one flow to another flow. The plates and fins are created from sheet metal material brazed together to define the different flow paths. Thermal gradients present in the sheet material create stresses that can be very high in certain locations. The stresses are typically largest in one corner where the hot side flow first meets the coldest portion of the cooling flow. In an opposite corner where the coldest hot side flow meets the hottest cold side flow, the temperature difference is much less resulting in unbalanced stresses across the heat exchanger structure. Increasing temperatures and pressures can result in stresses on the structure that can exceed material and assembly capabilities.

Turbine engine manufactures utilize heat exchangers throughout the engine to cool and condition airflow for cooling and other operational needs. Improvements to turbine engines have enabled increases in operational temperatures and pressures. The increases in temperatures and pressures improve engine efficiency but also increase demands on all engine components including heat exchangers.

Turbine engine manufacturers continue to seek further improvements to engine performance including improvements to thermal, transfer and propulsive efficiencies.

### SUMMARY

In a first aspect, a heat exchanger includes at least one plate including a first end portion. A second end portion is spaced apart from the first end portion. A cavity is disposed between the first end portion and the second end portion. The cavity defines a first flow path. An outer surface portion defines a second flow path. The at least one plate includes a single unitary part without a joint between any two portions. A first end cap defines an inlet disposed at the first end portion. A second end cap defines an outlet at the second end portion.

In an embodiment according to the above, the first end portion and the second end portion include an upper support surface portion within a common upper plane and a lower support surface portion within a common lower plane.

In another embodiment according to any of the above, fin portions extend outward from the outer surface portion.

In another embodiment according to any of the above, the outer surface portion includes a first side and a second side and the fin portions extend from both the first side and the second side.

In another embodiment according to any of the above, the fin portions include a tip portion that extends past either of the upper common plane and the lower common plane.

In another embodiment according to any of the above, the cavity includes at least one tabulator extending into the first flow path.

In another embodiment according to any of the above, the at least one plate includes a first plate, stacked on a second plate such that the lower support surface portion of the first plate abuts the upper support surface portion of the second plate and the second flow path is defined within a space between the first plate and the second plate.

In another embodiment according to any of the above, additional plates stacked against one of the first plate and the second plate and aligned such that a lower support surface portion of one plate abuts an upper support surface portion of another plate, wherein each of the plates defines a first flow path through the plate and the second flow path is defined in spaced between the stacked plates.

In another embodiment according to any of the above, the heat exchanger is an air to air heat exchanger and the first flow path through the at least one plate is configured for an airflow that is to be cooled and the second flow path is for a cooling airflow.

In another aspect, a plate for a heat exchanger includes a first end portion spaced apart from a second end portion. A cavity defines a first flow path between the first end portion and the second end portion. An outer surface portion defines a second flow path. The plate includes a single unitary part without a joint between any two portions.

In an embodiment according to the above, the first end portion and the second end portion include an upper support surface portion within a common upper plane and a lower support surface portion within a common lower plane.

In another embodiment according to any of the above, the outer surface portion includes a first side and a second side and the fin portions extend from both the first side and the second side.

In another embodiment according to any of the above, the fin portions include a top portion that extends past either of the upper common plane and the lower common plane.

In another embodiment according to any of the above, the cavity includes a means for disrupting flow.

In another aspect, a method of building a heat exchanger includes creating a core defining internal features including an inner cavity of a completed plate. The core is inserted within a mold cavity that defines outer surfaces of a completed plate. The plate is molded to include the outer surfaces defined by the mold cavity an inner surfaces defined by the core. The completed plate defines a first flow path through the inner cavity and an outer surface defining a second flow path. At least one completed plate is assembled to a first end cap at a first end portion of a completed plate and a second end cap to a second end portion of the completed plate.

In an embodiment according to the above, the mold cavity includes features for defining fin portions that extend outward from an outer surface of a completed plate.

In another embodiment according to any of the above, the core includes portion for defining flow disrupting features within the inner cavity of the completed plate.

In another embodiment according to any of the above, each plate includes a single unitary part without a joint between any two portions.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a perspective view of an example heat exchanger embodiment.
Figure 2 is a perspective sectional view of the example heat exchanger.
Figure 3 is a perspective view of an example plate for the heat exchanger.
Figure 4 is a side view of the example plate.
Figure 5 is a partial cross-sectional view of the example heat exchanger.
Figure 6 is a partial top view of the example plate.
Figure 7 is a partial cross-sectional view of the example plate.
Figure 8 is a sectional view illustrating a cavity of the plate.
Figure 9 is an enlarged view of an inlet for the example plate.
Figure 10 is a schematic representation of a method for fabricating the example plate.

### DETAILED DESCRIPTION

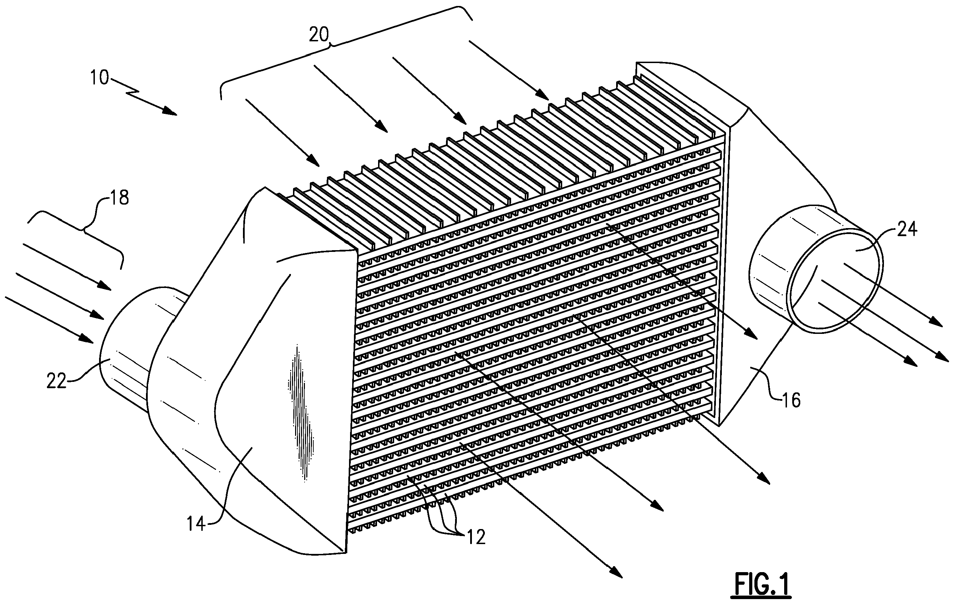

Figure 1 schematically illustrates a heat exchanger 10 that includes a first end cap 14 and a second end cap 16 disposed on either end of the plurality of stacked plates 12. The first end cap 14 includes an inlet 22 for a first airflow 18. The second end cap 16 includes an outlet 24 for the first airflow 18. The first airflow 18 in this example embodiment is a hot airflow that is cooled by a cooling airflow 20 that flows through passages between the pluralities of stacked plates 12. The example heat exchanger 10 is an air to air heat exchanger which cools hot air 18 that flows through cavities within the plurality of plates 12.

The plurality of plates 12 are integrally formed separate individual parts that are stacked upon each other and then placed in communication with the end caps 14 and 16. Cooling airflow 20 flows through the passages created between stacked plates 12 to cool the airflow 18 that is flowing through cavities defined within the plates 12.

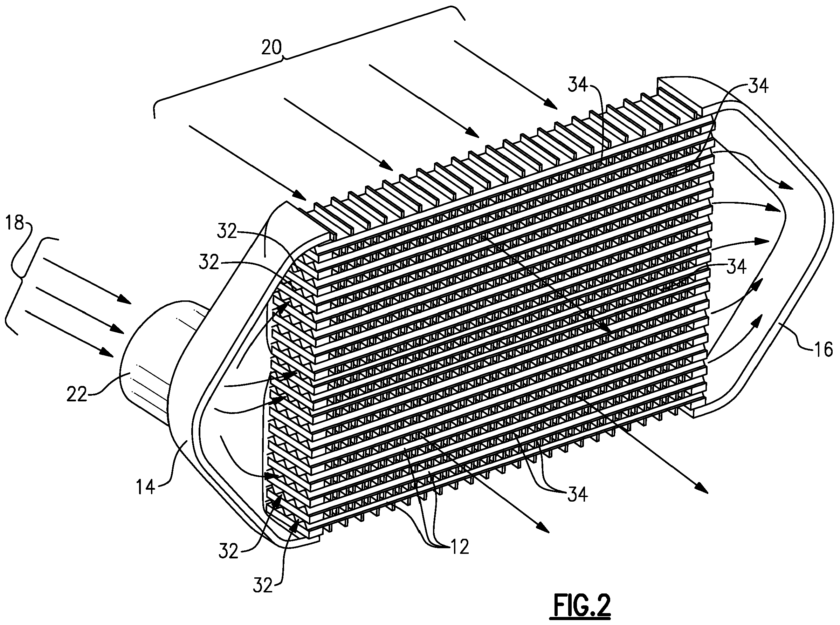

Referring to Figure 2 with continued reference to Figure 1, the example heat exchanger 10 includes the end caps 14, 16 that define a flow path from the inlet 22 to inlets for each of the plurality of stacked plates 12. In this example, the stacked plates 12 define a first flow path 32 for the hotter airflow 18 and also define the second flow path 34 in spaces defined between the plates 12 for the cooling airflow 20. Airflow 18 flows into the inlet 22 of the first end cap 14 through a cavity defined within each of the plates 12 and exits through the second end cap 16.

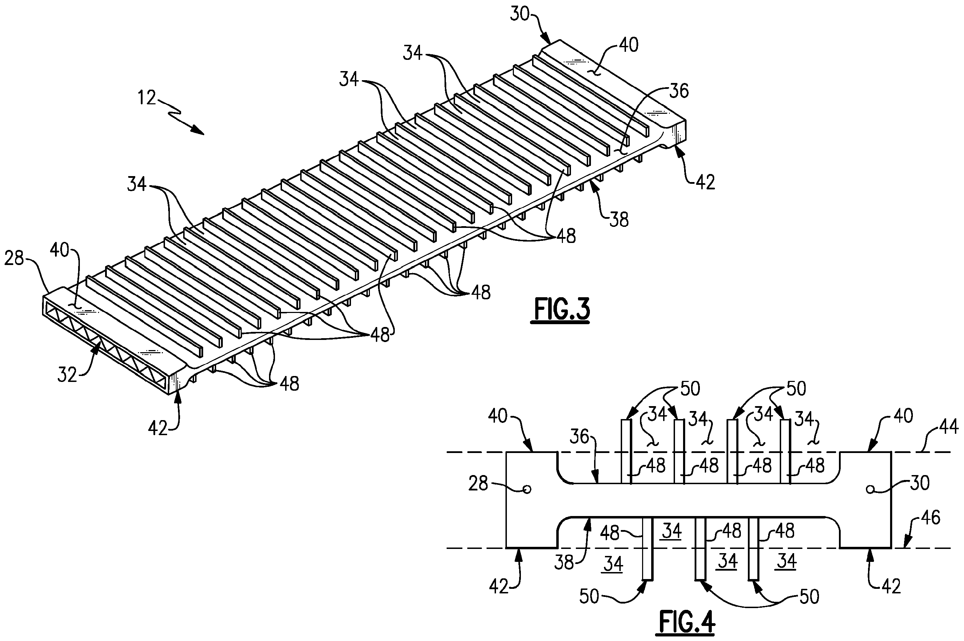

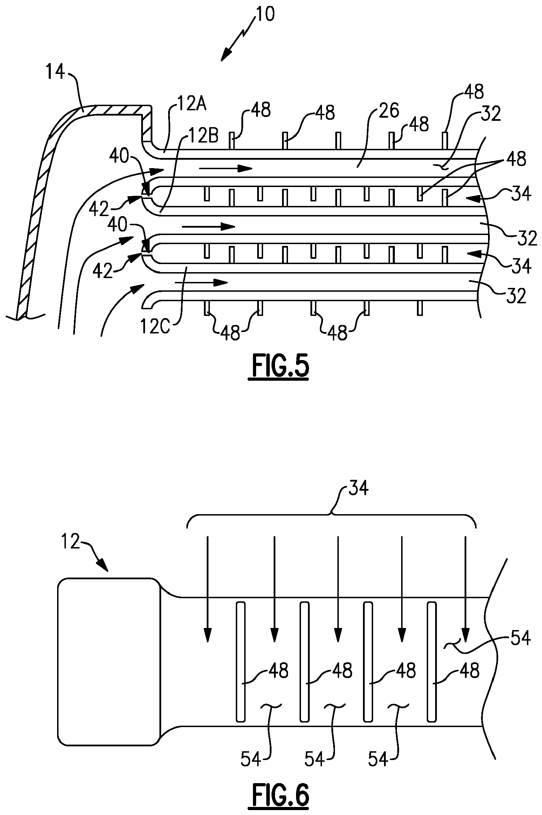

Referring to Figures 3 and 4 with continued reference to Figures 1 and 2, the example plate 12 is a single unitary part without any joints between any portions of the plate. The plate 12 includes a first end portion 28 and a second end portion 30. The cavity 26, (Shown in Figure 5), extends between the first end portion 28 and the second end portion 30. The first end portion 28 includes an upper support surface 40 and a lower support surface 42. The second end portion 30 also includes an upper support surface 40 and a lower support surface 42.

The upper and lower support surfaces 40, 42 are disposed within common planes across the first and second end portions 28, 30. In this example, the upper support surfaces 40 are disposed within a common upper plane 44 and the lower support surfaces 42 are disposed within a common lower plane 46. The plate 12 includes an outer top surface 36 in an outer bottom surface 38. From each of the outer surfaces 36, 38 extend a plurality of fins 48. The fins 48 are an integral part of the outer surfaces 36, 38. The fins 48 define the second flow path 34 there between. In other words, each of the plurality of fins 48 extends upward and across the plate 12 perpendicular to the flow paths 32 defined within each of the plates 12.

Each of the fins 48 include a tip portion 50. In this example, the tip portion 50 is disposed above the respective ones of the common upper plane 44 and the common lower plane 42. In other words, each of the fins 48 extends past corresponding upper and lower support surfaces 40, 42. The fins 48 are offset between the upper and lower surfaces 36, 38 such that fins 48 extending downward from the lower surface 38 fit between fins 48 extending upward from an upper surface 36 of another plate 12. This inter-fit configuration enables the plates 12 to be stacked one on top of the other to define a plurality of second flow paths 34. The stacked plates 12 define a plurality of first flow paths 32 that go through the plates 12 and the plurality of second flow paths 34 that flows through the spaces defined between fins 48 of plates in the stacked configuration.

Referring to Figure 5 with continued reference to Figures 2-4, the heat exchange 10 utilizes a plurality of plates 12. In this example, a first plate 12a, a second plate 12b, and a third plate 12c are illustrated by way of example. Each of the plates 12a, 12b and 12c are abutted at the first end portion 28 and the second end portion 30. The second end portion 30 is not shown in this example but is identical to the abutting assembly indicated with regard to the first end portions 25 shown in Figure 5. In this configuration, the plates 12 are stacked atop each other such that the support surface 40 of a plate 12c abuts a lower support surface 42 of the plate 12b. Similarly, the upper support surface 40 of the plate 12b abuts a lower support surface 42 of the plate 12a. As appreciated, although only three plates 12 are shown by way of example, any number of plates 12 could be utilized to define the first flow path 32 and second flow paths 34.

Referring to Figure 6 with continued reference to Figure 5, the second flow path 34 is shown where each of the fins 48 define channels 54 between the fins 48. The second cooling flow 20 therefore flows through the second flow passages 34 between the fins 48 and through the channels 54.

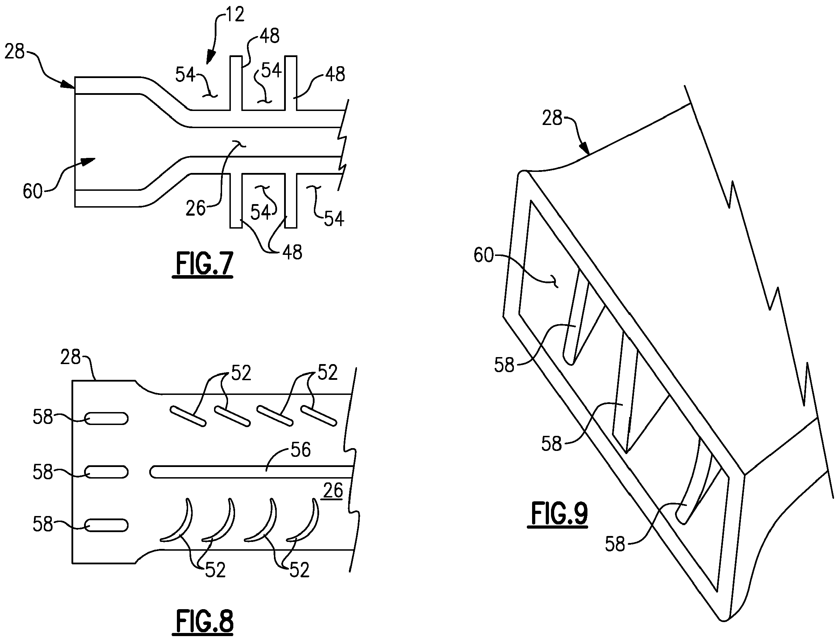

Referring to Figures 7 and 8, the example plate 12 is shown in partial cross-section and includes an inlet 60 at each of the first and second end portions 28. In this example, only the first end portion 28 is disclosed however, the second end portion would be substantially identical to the first end portion 28. The plate cavity 26 extends from the first end portion 28 to the second end portion 30. The plate cavity 26 may be a smooth cavity to provide a smooth uninterrupted passage for airflow with the first flow 18. The cavity 26 may also include a rib 56 to subdivide the channel and also flow disrupting features 52. The flow disrupting features can include tabulators, pins, trip strips, chevrons, raised features, riblets, dimples, bumps, and local surface roughness that may disrupt and create a turbulent flow and improve thermal transfer through the plate 12 as are shown in Figure 8.

Referring to Figure 9 with continued reference to Figures 7 and 8, the example inlet 60 may include inlet ribs 58 that may be utilized to divide and direct flow through the cavity 26.

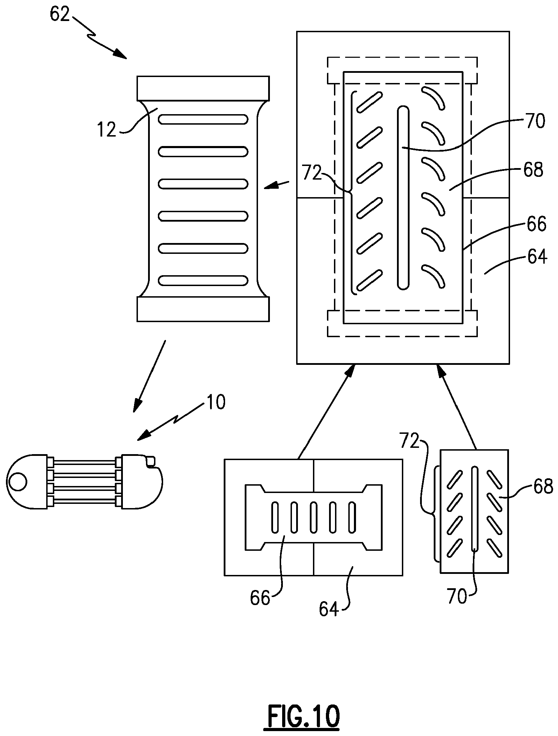

Referring to Figure 10 the example plate 12 is fabricated as a single unitary one piece part. Because the plate 12 is fabricated as a single unitary piece, there are no brazed joints, seams or other potential welds that may create potential weak spots due to thermal gradients and difference throughout the plate 12 caused by the different temperatures in the hot and cooling airflows. Additionally, the single unitary plate 12 does not have mechanical strength debits or potential geometric and/or material discontinuities inherent in brazed joints.

A method of fabricating the plate 12 is generally indicated at 62 and schematically illustrated in Figure 10 and includes the generation of a core 68. In this example, the core 68 is fabricated from a ceramic material and defines the internal features of the cavity 26 of the plate 12. Those internal features may be defined by space 70 for the rib 56 or spaces 72 to define the flow disrupting features 52. It should be understood that although a single rib 70 is illustrated along with schematic illustrations of flow disrupting features 72, other features within the cavity 26 that may improve the transfer of thermal energy from the hot air flow 18 may also be utilized and fabricated and defined by the core assembly 68.

The core assembly 68 is inserted into a mold 64 for formation of a completed part as part of known over-molding processes. The mold 64 defines a cavity 66 that defines the outer features of the plate 12. Typical insert molding operations utilize the core 68 that is inserted and held within the mold in a specific orientation to define the interior features of a completed product.

Molding operations are performed by injecting material into the mold and holding the material under pressure until cured sufficiently to allow removal of the part. In this example the material comprises a metal alloy material capable of performing at elevated temperatures as are encountered during operation of a gas turbine engine. The core 68 is then removed through a heating step or other processes as are known. The completed plate 12 is a single unitary structure and is combined with other separate plates to assemble and configure a heat exchanger with the desired thermal transfer capacity.

The example heat exchanger is fabricated utilizing a plurality of single unitary plate structures. A single plate structure may operate as a heat exchanger or may be combined with a plurality of other plate structures to increase the flow of capacities. Because a single plate structure is utilized instead of a brazed or welded multi-piece structure, thermal gradients do not generate stresses at joints that could result in failure of the heat exchanger. Accordingly, the example plate structure provides a robust system for assembling a heat exchanger that resists mechanical fatigue and failures that are present in multi-piece heat exchanger assemblies.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A heat exchanger (10) comprising:
at least one plate (12) comprising:
a first end portion (28);
a second end portion (30) spaced apart from said first end portion (28);
a cavity (26) disposed between said first end portion (28) and said second end portion (30), the cavity (26) defining a first flow path (32); and
an outer surface portion (36, 38) defining a second flow path (34), wherein the at least one plate (12) comprises a single unitary part without a joint between any two portions,
a first end cap (14) defining an inlet (22), at the first end portion (28); and
a second end cap (16) defining an outlet (24), at the second end portion (30).

2. A plate (12) for a heat exchanger (10), the plate (12) comprising:
a first end portion (28) spaced apart from a second end portion (30);
a cavity (26) defining a first flow path (32) between the first end portion (28) and the second end portion (30); and
an outer surface portion (36, 38) defining a second flow path (34), wherein the plate (12) comprises a single unitary part without a joint between any two portions.

3. The heat exchanger (10) as recited in claim 1 or plate (12) as recited in claim 2, wherein the first end portion and the second end portion include an upper support surface portion (40) within a common upper plane (44) and a lower support surface portion (42) within a common lower plane (46).

4. The heat exchanger (10) or plate (12) as recited in claim 3, including fin portions (48) extending outward from the outer surface portion (36, 38).

5. The heat exchanger (10) or plate (12) as recited in claim 4, wherein the outer surface portion (36, 38) comprises a first side (36) and a second side (38) and the fin portions (48) extend from both the first side (36) and the second side (38).

6. The heat exchanger (10) or plate (12) as recited in claim 4 or 5, wherein the fin portions (48) include a tip portion (50) that extends past either of the upper common plane (44) and the lower common plane (46).

7. The heat exchanger (10) as recited in any of claim 3 to 6, wherein the at least one plate (12) comprises a first plate (12a), stacked on a second plate (12b) such that the lower support surface portion (42) of the first plate (12a) abuts the upper support surface portion (40) of the second plate (12b) and the second flow path (34) is defined within a space between the first plate (12a) and the second plate (12b).

8. The heat exchanger (10) as recited in claim 7, including additional plates (12c) stacked against one of the first plate (12a) and the second plate (12b) and aligned such that a lower support surface portion (42) of one plate (12a, 12b, 12c) abuts an upper support surface portion (40) of another plate (12a, 12b, 12c), wherein each of the plates (12a, 12b, 12c) defines a first flow path (32) through the plate (12a, 12b, 12c) and the second flow path (34) is defined in spaces between the stacked plates (12a, 12b, 12c).

9. The heat exchanger (10) as recited in any preceding claim, wherein the cavity (26) includes at least one tabulator (52) extending into the first flow path (32).

10. The heat exchanger (10) as recited in any preceding claim, wherein the heat exchanger (10) is an air to air heat exchanger (10) and the first flow path (32) through the at least one plate (12) is configured for an airflow (18) that is to be cooled and the second flow path (34) is for a cooling airflow (20).

11. The heat exchanger (10) or plate (12) as recited in any preceding claim, wherein the cavity (26) includes a means (52) for disrupting flow.

12. A method of building a heat exchanger (10) comprising:
creating a core (68) defining internal features including an inner cavity (26) of a completed plate (12);
inserting the core (68) within a mold cavity (66) that defines outer surfaces (36, 38) of the completed plate (12);
molding the plate (12) to include the outer surfaces (36, 38) defined by the mold cavity (66) and inner surfaces defined by the core (68), wherein the completed plate (12) defines a first flow path (32) through the inner cavity (26) and an outer surface (36, 38) defining a second flow path (34); and
assembling at least one completed plate (12) to a first end cap (14) at a first end portion (28) of the completed plate (12) and a second end cap (16) to a second end portion (30) of the completed plate (12).

13. The method as recited in claim 12, wherein the mold cavity (66) includes features for defining fin portions (48) that extend outward from the outer surface (36, 38) of the completed plate (12).

14. The method as recited in claim 12 or 13, wherein the core (68) includes portions (72) for defining flow disrupting features (52) within the inner cavity (26) of the completed plate (12).

15. The method as recited in any of claims 12 to 14, wherein each plate (12) comprises a single unitary part without a joint between any two portions.
